# EUROPÄISCHE PATENTSCHRIFT

(11) **EP 2 740 105 B1**
(45) Veröffentlichungstag und Bekanntmachung des Hinweises auf die Patenterteilung: **13.11.2019**
(21) Anmeldenummer: 12741003.3
(22) Anmeldetag: 01.08.2012
(51) Int. Cl.: G07B 15/02, G06Q 10/02, G06Q 50/30, E04H 6/42, G08G 1/123

(54) **FAHRZEUGVERMIETSYSTEM**
VEHICLE RENTAL SYSTEM
SYSTÈME DE LOCATION DE VÉHICULE

(30) Priorität: 05.08.2011 DE 102011080557
(43) Veröffentlichungstag der Anmeldung: 11.06.2014
(73) Patentinhaber: Bayerische Motoren Werke Aktiengesellschaft, 80809 München (DE)
(72) Erfinder: SCHRÖDER, Astrid, 80799 Muenchen (DE)
(86) Internationale Anmeldenummer: PCT/EP2012/065046
(87) Internationale Veröffentlichungsnummer: WO 2013/020875

(56) Entgegenhaltungen:
- EP-A1- 1 318 469
- EP-A2- 0 698 864
- EP-A2- 1 067 481
- DE-C1- 19 917 885
- US-B1- 6 947 881

## Beschreibung

Die Erfindung betrifft ein Verfahren zum rechnergestützten Betreiben eines Fahrzeugvermietsystems und ein Fahrzeugvermietsystem.

Unter einem Fahrzeugvermietsystem (sog. Car Sharing) wird die organisierte gemeinschaftliche Nutzung eines oder mehrerer Fahrzeuge verstanden. Die Fahrzeuge einer Car Sharing-Organisation sind zumeist auf fest angemieteten Parkplätzen über eine Stadt oder einen größeren Ort verteilt. Die Standorte befinden sich häufig bei Knotenpunkten des öffentlichen Verkehrs (wie Bahnhöfen, Endstationen von Buslinien, usw.), wo sie von den Mitgliedern der Car Sharing-Organisation gut erreichbar sind. Die vorab reservierten Fahrzeuge werden zumeist benutzt, um von diesen Knotenpunkten auch abgelegenere Ziele zu erreichen. Im Unterschied zu einer klassischen Autovermietung ist die Fahrzeugnutzung auch für kurze Zeit, bspw. stundenweise, möglich. Vor allem in städtischen Wohnquartieren, wo nicht für alle Fahrzeuge ein Parkplatz zur Verfügung steht, kann Car Sharing eine Entlastung der Parkplatzsituation bringen.

Car Sharing in der genannten Weise basiert somit auf einem gut ausgebauten öffentlichen Verkehrssystem und stellt ein Mittel der "kombinierten Mobilität" dar. Nachteilig an klassischem Car Sharing ist der Umstand, dass ein Nutzer sich erst zu einem der Standorte der Car Sharing-Organisation begeben muss, bevor er das Fahrzeug nutzen kann. Eine direkte Nutzung von der Wohnung oder Arbeitsstätte aus ist in der Regel nicht möglich. Darüber hinaus muss die Nutzungsdauer des Fahrzeugs vorab festgelegt werden. Ein genutztes Fahrzeug muss pünktlich zurückgebracht werden, um sicher zu stellen, dass nachfolgende Nutzer das Auto pünktlich übernehmen können. Darüber hinaus ist es nicht möglich, Fahrzeuge zu personalisieren.

Für die Reservierung der Fahrzeuge einer Car Sharing-Organisation werden verschiedene Systeme eingesetzt. Bekannt sind Lösungen mit einfachen Schlüsselkästen und manueller Buchung bis hin zu hochkomplexen computergestützten Lösungen. Bei größeren Organisationen ist die automatische Buchung über Internet oder Telefoncomputer rund um die Uhr möglich. Ebenso sind die Fahrzeuge häufig mit Bordcomputern ausgerüstet, die automatisch mit der Zentrale synchronisiert werden. Die Bordcomputer geben ein Fahrzeug für den Berechtigten nur für die gebuchte Zeitspanne frei. Hierdurch soll die Buchung effizienter gestaltet werden. Darüber hinaus soll Missbrauch verhindert werden.

Neben dem klassischen Car Sharing hat sich in jüngerer Zeit in großen Städten das sog. Roadside-Car Sharing etabliert. Bei diesem System sind die Fahrzeuge nicht an festgelegten Standorten stationiert, sondern können innerhalb eines festgelegten Gebietes einer Stadt überall abgestellt werden. Somit sind für einen Nutzer auch Einweg-Fahrten möglich. Man geht davon aus, dass sich die Fahrzeuge weitgehend gleichmäßig im Stadtgebiet verteilen. Zielstellung ist, dass jeder Teilnehmer bei Bedarf ein Fahrzeug innerhalb von bspw. 15 Geh-Minuten erreichen kann. Freie Fahrzeuge können per Internet, Smart Phone-Applikation oder telefonisch lokalisiert und spontan gemietet und eine bestimmte Zeitspanne im Voraus reserviert werden. Die Abrechnung erfolgt zeitabhängig, wobei ein Minutenpreis, gefahrene Kilometer, Versicherung und das Parken in gekennzeichneten Gebieten beinhaltet. Derartige Roadside-Car Sharing Systeme werden bspw. mit Car2go der Firma Daimler AG sowie Drive Now der Firma BMW AG angeboten.

Insbesondere durch das Roadside-Car Sharing ist die Akzeptanz dieser Mobilitätsdienstleistung gestiegen. Es wäre wünschenswert, Car Sharing derart weiter zu optimieren, dass eine möglichst gleichmäßige Auslastung der Fahrzeuge der Organisation gegeben ist.

Aus der Druckschrift EP 0 698 864 A1 ist ein Fahrzeugvermietsystem bekannt. Das automatische Fahrzeugvermietsystem ist an einem Parkplatz mit einer Reihe von verfügbaren Fahrzeugen installiert, an dem Autos ausgegeben und zurückgegeben werden. Ein Halstestellenautomat am Parkplatz überprüft die Benutzerkennung, um gibt eine Chipkarte zur Nutzung eines verfügbaren Wagen aus, wenn die Identifikationsprüfung korrekt ist, und nimmt auch die Chipkarten für zurückgegebene Fahrzeuge entgegen.

Es ist Aufgabe der Erfindung, ein Verfahren anzugeben, welches eine bessere Auslastung der in einem Fahrzeugvermietsystem betriebenen Fahrzeuge ermöglicht. Diese Aufgabe wird gelöst durch ein Verfahren gemäß den Merkmalen des Patentanspruches 1 sowie ein Fahrzeugvermietsystem gemäß den Merkmalen des Patentanspruches 14. Vorteilhafte Ausgestaltungen ergeben sich aus den abhängigen Patentansprüchen.

Die Erfindung schafft ein Verfahren zum rechnergestützten Betreiben eines Fahrzeugvermietsystems. Bei diesem wird eine Anzahl an Fahrzeugen einem definierten Nutzerkreis für eine temporäre Nutzung bereitgestellt. Unter Fahrzeugen sind nicht nur Kraftfahrzeuge (Autos) herkömmlicher Art zu verstehen. Vielmehr fallen unter Fahrzeuge auch Elektrofahrzeuge, Fahrräder, E-Bikes (Pedelecs) sowie sonstige für den Individualverkehr geeignete Fortbewegungsmittel.

Die Fahrzeuge werden an einem oder mehreren, ausschließlich dem Nutzerkreis zugänglichen Orten mit jeweils einem oder mehreren, für die Fahrzeuge reservierten Stellplätzen bereitgestellt. In dem erfindungsgemäßen Verfahren ist somit die spontane Miete eines am Straßenrand abgestellten Fahrzeugs nicht vorgesehen. Die ausschließlich dem Nutzerkreis zugänglichen Orte sind vorzugsweise Tiefgaragen, welche ansonsten für die Öffentlichkeit nicht zugänglich sind. Alternativ zu Tiefgaragen können dies, für die Öffentlichkeit unzugängliche, oberirdisch angeordnete Stellplätze sein.

Basierend auf einer Nutzereingabe, welche zumindest eine Information über einen Mietbeginn und ein Mietende eines Fahrzeugs sowie eine Nutzerkennung umfasst, wird in einem rechnergestützten Buchungssystems eine Buchung des Fahrzeugs durchgeführt. Insoweit wird auf das sowohl von klassischen Car Sharing-Systemen als auch auf die beim Roadside-Car Sharing bekannte Vorab-Buchung von Fahrzeugen zurückgegriffen. Beim Roadside Carsharing beschränkt sich die Zeit der Vorausbuchung in der Regel auf einige Minuten (z.B. max. 15 Minuten), um zum Fahrzeug hinlaufen zu können. Weiterhin ermittelt eine die Stellplätze überwachende Sensorik die Anwesenheit der Fahrzeuge. Die die Stellplätze überwachende Sensorik kann ein binärer Anwesenheitssensor sein. Ebenso und bevorzugt wird als Sensorik eine Kamera verwendet, welche nicht nur in der Lage ist, die Präsenz eines Fahrzeugs auf einem der reservierten Stellplätze festzustellen, sondern darüber hinaus weitere Funktionalität für das Fahrzeugvermietsystem bereit stellt.

Schließlich zeigt das Buchungssystem ein Fahrzeug, das vor Ablauf des in dem Buchungssystem gespeicherten Mietendes auf einem der reservierten Stellplätze durch die Sensorik als abgestellt detektiert wird, in dem Buchungssystem als für eine Miete frei verfügbar an. Durch die sensorische Erfassung der Präsenz oder Anwesenheit eines Fahrzeugs auf einem des für die Fahrzeuge reservierten Stellplatzes kann in dem Buchungssystem ein Abbild der Realität geschaffen werden. Gegenüber einem auf Kalendereinträgen basierenden Buchungssystem kann hierdurch eine höhere Auslastung der Fahrzeuge ermöglicht werden. Sollte der Benutzer das Fahrzeug nur "zwischendurch" abstellen, um nochmal wegzufahren oder etwas auszuladen, muss er das kenntlich machen.

Das erfindungsgemäße Verfahren beruht auf der Überlegung, dass bei einer vorher festgelegten Nutzungsdauer des Fahrzeugs das Fahrzeug pünktlich von seinem Nutzer zurückgebracht werden muss, damit einem folgenden Nutzer das Fahrzeug in gewünschter Weise zur Verfügung steht. In der Regel führt dies dazu, dass das Fahrzeug vor Ablauf des Mietendes zurückgegeben wird und damit bereits zu einem früheren Zeitpunkt für eine Verwendung, z.B. des nachfolgenden Nutzers, zur Verfügung steht.

Ermöglicht wird dieses Vorgehen durch die Präsenzüberwachung der Stellplätze an einem nur dem Nutzerkreis zugänglichen Ort, welche für die zur temporären Anmietung vorgesehenen Fahrzeuge reserviert sind. Im Gegensatz zu einer in den Fahrzeugen vorgesehenen Telematikeinheit, wie diese bspw. bei Fahrzeugen für spontanes (Roadside-) Car Sharing verwendet wird, lässt sich eine Echtzeit-Abbildung der Realität mit geringerem Aufwand und geringeren Kosten realisieren. Insbesondere wird hierdurch auch die Überwachung der Verfügbarkeit von Fahrzeugen an solchen Orten ermöglicht, bei denen keine Funkverbindung zwischen einer in einem Fahrzeug befindlichen Telematikeinheit und einer entsprechenden Zentralrecheneinheit des Buchungssystems möglich ist.

Zweckmäßigerweise sind die Stellplätze in einem oder mehreren Objekten einer jeweiligen Eigentümergemeinschaft oder eines Mietobjekts (z.B. Bürogebäude mit Gewerbemietern) angeordnet, wobei lediglich Bewohner und/oder Mieter der betreffenden Objekte Teilnehmer des Fahrzeugvermietungssystems für ihr Objekt, und optional für eine Mehrzahl weiterer Objekte sind. Unter einem Objekt werden hierbei private Wohnanlagen verstanden. Eine Wohnanlage kann dabei die gemischte Nutzung von Wohnungen und Büros und Gewerbeeinheiten sowie rein für Wohnzwecke genutzte Wohnanlagen umfassen. Besonders geeignete Objekte in diesem Sinne sind Wohnanlagen, in denen den Bewohnern und/oder Mietern bereits verschiedene Dienste, wie z.B. Hausmeisterservice, Doorman, usw. angeboten werden. Das Fahrzeugvermietsystem wird in das Gesamtservicekonzept solcher Objekte integriert und kann bspw. in Kooperation mit einem Bauträger oder der Wohneigentümergemeinschaft angeboten werden. Wenn in diesem Zusammenhang von Bewohnern der Objekte die Rede ist, so sind hierunter insbesondere Privatpersonen, welche Eigentümer oder Mieter einer für Wohnzwecke genutzten Wohnung sind, zu verstehen. Mieter sind insbesondere Mieter gewerblicher Einheiten oder Büros.

Der Nutzerkreis für das erfindungsgemäß vorgeschlagene Fahrzeugvermietsystem setzt sich dabei lediglich aus den Bewohnern und/oder Mietern eines Objekts zusammen. Dieser Nutzerkreis ist automatisch für die Nutzung des Fahrzeugvermietsystems registriert, wobei eine Grundgebühr bspw. in Verbindung mit einem Wohngeld abgerechnet werden kann. Eine Registrierung von Personen außerhalb der Objekte ist in diesem Fahrzeugvermietsystem nicht vorgesehen. Eine Ausnahme können Gäste der Bewohner mit Gästekennung sein. Im Zuge der automatischen Registrierung der Bewohner und/oder Mieter der betreffenden Objekte kann bspw. deren Führerschein mit einem RFID-Tag als Nutzungs- und Zugangsberechtigungsausweis verwendet werden. Die strikte Beschränkung des Nutzerkreises auf die Bewohner und/oder Mieter eines betreffenden Objekts ermöglicht im Vergleich zu den bekannten Car Sharing-Systemen wesentlich komfortablere und bessere Nutzbarkeit. Dadurch, dass automatisch Privatpersonen und die Mieter von Büros oder Gewerbeeinheiten Teil des Nutzerkreises sind, kann eine kontinuierliche Auslastung der Fahrzeuge erzielt werden. Während die Mieter von Büros oder Gewerbeeinheiten eine Nutzung der Fahrzeuge zu Geschäftszeiten bevorzugen, greifen Privatnutzer erfahrungsgemäß häufiger an Wochenenden oder Abenden auf zur Verfügung stehende Fahrzeuge zurück. Hierdurch ergibt sich im Ergebnis eine verbesserte Auslastung der in dem Fahrzeugvermietsystem zur Verfügung gestellten Fahrzeuge.

Insbesondere ist in einer weiteren bevorzugten Ausgestaltung vorgesehen, dass für den Zugang zu den Stellplätzen der Objekte die Nutzerkennung eines Nutzers ausgewertet wird, wobei ein Zugang nur bei freigeschalteter Nutzerkennung gewährt wird. Hierdurch soll sichergestellt werden, dass die in dem Fahrzeugvermietsystem zur Verfügung gestellten Fahrzeuge auch tatsächlich nur für die Bewohner und/oder Mieter eines Objekts zugänglich sind.

Gemäß einer weiteren zweckmäßigen Ausgestaltung erfolgt die Nutzereingabe über eine Benutzerschnittstelle, über die dem Nutzer für eine Miete verfügbare Fahrzeuge als Videobild, optional mit weiteren Informationen über das Fahrzeug, dargestellt werden. Benutzerschnittstellen können ein Rechner, ein Mobilgerät oder ein Haustechnikgerät sein. Sämtliche der genannten Geräte verfügen über ein Ein- und Ausgabemittel, wie z.B. ein Display, über welche eine Nutzung des Buchungssystems ermöglicht wird. Die Übermittlung eines realen Bildes anstelle einer schematischen Darstellung erhöht die Akzeptanz für die Nutzung eines Fahrzeugs aus dem Fahrzeugvermietsystem.

In einer weiteren Ausgestaltung werden durch die Sensorik freie Stellplätze ermittelt und einer Parkplatzorganisationseinheit des Buchungssystems übermittelt, wobei an eine in den Fahrzeugen integrierte Benutzerschnittstelle und/oder die Benutzerschnittstellen eines Nutzers eine Information über freie Stellplätze an den Orten mit den Stellplätzen übermittelt wird. Diesem Vorgehen liegt die Überlegung zugrunde, dass Benutzern des Fahrzeugvermietsystems eines Objekts die Stellplätze des Fahrzeugvermietsystems eines anderen Objekts für das Parken zur Verfügung gestellt werden sollen. Um sicherzustellen, dass in dem gewünschten Objekt auch ein Parkplatz frei ist, wird eine entsprechende Information darüber und über die Dauer, wie lange ein Stellplatz frei ist, bereitgestellt. Insbesondere kann dabei vorgesehen sein, dass basierend auf einer Nutzereingabe durch das Buchungssystem eine Reservierung eines freien Stellplatzes vorgenommen wird.

Es ist weiterhin vorteilhaft, wenn in dem Buchungssystem für jede Nutzerkennung ein Datensatz gespeichert wird, der eine der Nutzerkennung zugeordnete Objektkennung des Objekts, in dem der Nutzer Mieter und/oder Bewohner des Objekts ist, sowie Rechte bzgl. der Nutzung von Stellplätzen anderer Objekte umfasst. Unter Stellplätzen sind hierbei solche Stellplätze zu verstehen, welche in diesem Objekt dem Fahrzeugvermietsystem zuzurechnen sind. Zweckmäßigerweise werden bei der Detektion eines Fahrzeugs des Fahrzeugvermietsystems an einer Zugangssperre eines der anderen Objekte anhand der Objekterkennung eines Nutzers die ihm zugeordneten Rechte für dieses Objekt ermittelt und abhängig davon wird die Zugangssperre für die Ein- und Ausfahrt des Fahrzeugs in das Objekt freigegeben oder nicht. Eine Zugangssperre kann bspw. ein Garagentor, eine Schranke, ein versenkbarer Poller usw. sein. Den Fahrzeugen des Fahrzeugvermietsystems eines Objekts wird es damit gestattet, mit dem Fahrzeug des Fahrzeugvermietsystems auf den Stellplätzen eines anderen Objekts zu parken. Diese Berechtigung kann auch nutzerbezogen sein, d.h. der Nutzer könnte auch mit seinem Privatfahrzeug in den anderen Objekten parken.

Um sicher zu stellen, dass ausreichend Fahrzeuge für das Fahrzeugvermietsystem innerhalb eines das Fahrzeugvermietsystem anbietenden Objekts zur Verfügung stehen, ist gemäß einer weiteren Ausgestaltung optional vorgesehen, bei der Detektion eines Fahrzeugs an der Zugangssperre eines der Objekte des Fahrzeugvermietsystems anhand dessen Fahrzeugkennung zu überprüfen, ob dieses Fahrzeug ein Fahrzeug eines spontanen (Roadside-) Fahrzeugvermietsystems, insbesondere desselben Anbieters, ist, wobei im positiven Fall die Zugangssperre für die Einfahrt des Fahrzeugs in das Objekt freigegeben wird. Fahrzeugen eines Roadside-Fahrzeugvermietsystems wird damit die Einfahrt in das Objekt und das Abstellen des Fahrzeugs auf den Stellplätzen des Fahrzeugvermietsystems gewährt. Demgegenüber ist es Nutzern des Roadside-Fahrzeugvermietsystems nicht gestattet, in dem Objekt stehende Fahrzeuge zur Miete anzumieten.

Da in den beiden genannten Varianten in jedem Fall die Einfahrt von an Fahrzeugvermietungssystemen teilnehmenden Fahrzeugen zu ermöglichen, erfolgt daher keine ausschließliche Überprüfung der Nutzerkennung, sondern eine Detektion der Fahrzeuge (z.B. einer Fahrzeugkennung) selbst.

Gemäß einer weiteren zweckmäßigen Ausgestaltung werden abhängig von, einer Nutzerkennung in dem Buchungssystem zugewiesenen, Rechten über die Benutzerschnittstelle in Reaktion auf eine Eingabe eines Nutzers Informationen über einen anderen Nutzer eines reservierten Fahrzeugs ausgegeben. Die Rechte können z.B. über eine optionale Freigabe der eigenen Buchungen gegenüber ausgewählten Nachbarn gewährt werden. Dies erlaubt die Absprache mehrerer Nutzer bzgl. sich überschneidender Nutzungszeiträume.

In einer weiteren zweckmäßigen Ausgestaltung werden von einem Nutzer in einem der Fahrzeuge des Fahrzeugvermietsystems getätigte oder auf einer Nutzereingabe basierende, das Fahrzeug betreffende persönliche Einstellungen zusammen mit dessen Nutzerkennung in einem Datenspeicher des Buchungssystems gespeichert und bei späterer Nutzung dieses oder eines anderen Fahrzeugs des Fahrzeugvermietsystems durch diesen Nutzer, insbesondere automatisch, in das Fahrzeug geladen und aktiviert. Das Fahrzeug betreffende persönliche Einstellungen sind bspw. gespeicherte Radiosender, eine Einstellung hinsichtlich Sitz- und/oder Lenkradposition, Klimatisierung, usw. Gegebenenfalls erfolgt bei unterschiedlichen Fahrzeugtypen eine Adaption der persönlichen Eigenschaften an die Gegebenheiten des Fahrzeugs. Es ist in diesem Zusammenhang vorgesehen, in dem Fahrzeugvermietsystem lediglich Modelle eines einzelnen Herstellers einzusetzen.

Eine weitere zweckmäßige Ausgestaltung ermöglicht die Feststellung von Schäden an einem zurückgegebenen Fahrzeug in automatisierter Weise. Hierzu erfasst die Sensorik, bspw. mittels Scanner-Abtastung und/oder visueller Abtastung, das Fahrzeugäußere und nimmt einen Vergleich der Ist-Daten mit für dieses Fahrzeug gespeicherten Soll-Daten und/oder mit den zeitlich zuletzt gespeicherten Ist-Daten vor. Die Soll-Daten betreffen dabei ein Neufahrzeug, das keinerlei Beschädigung aufweist. Der Vergleich der Ist-Daten mit den zuletzt gespeicherten Ist-Daten ermöglicht die Feststellung einer Veränderung zwischen der letzten und vorletzten Nutzung des Kraftfahrzeugs. Hierdurch können evtl. auftretende Schäden eindeutig einem bestimmten Nutzer zugeordnet werden. Die Akzeptanz wird hierdurch gesteigert, da das "manuelle" Suchen nach Schäden zeitaufwändig ist.

Die Erfindung umfasst weiter ein Fahrzeugvermietsystem, das ein Buchungssystem zur Durchführung des Verfahrens der oben beschriebenen Art umfasst.

Weitere Ausgestaltungen und Vorteile der Erfindung wird nachfolgend näher anhand eines Ausführungsbeispiels in der Zeichnung beschrieben. Die einzige Figur zeigt in einer schematischen Darstellung ein erfindungsgemäßes Fahrzeugvermietsystem.

Die Erfindung sieht die Einrichtung eines Fahrzeugvermietsystems in einem oder mehreren Objekten einer jeweiligen Eigentümergemeinschaft vor, wobei sämtliche in den Objekten enthaltene Einrichtungen ausschließlich einem aus Bewohnern und/oder Mietern bestehenden Nutzerkreis zur Verfügung gestellt werden. Objekte dieser Art stellen bspw. Wohnquartiere, insbesondere mit darin vorgesehenen Dienstleistungen wie Hausmeisterservice, Doorman (allg. Serviced Apartments) dar. Der Nutzerkreis des Fahrzeugvermietsystems setzt sich damit ausschließlich aus den Bewohnern, d.h. Privatpersonen von Wohnungen/Häusern und/oder Mietern, insbesondere von Büros und Gewerbeeinheiten, zusammen. In derartigen Objekten sind in der Regel nur für die Bewohner und/oder Mieter zugängliche Stellplätze, üblicherweise in einer Tiefgarage, bereitgestellt. Ein Teil dieser Stellplätze wird für Fahrzeuge des Fahrzeugvermietsystems bereitgestellt, wobei ausschließlich Fahrzeuge des Fahrzeugvermietsystems darauf abgestellt werden dürfen. Die in einem jeweiligen Objekt bereitgestellten Mietfahrzeuge können durch die Bewohner und/oder Mieter für kurze Zeit, bspw. stundenweise, genutzt werden. Die bereitgestellten Fahrzeuge können neben herkömmlichen Kraftfahrzeugen mit Verbrennungsmotor, auch Elektrofahrzeuge, Elektro-Bikes oder Fahrräder umfassen. Die Auswahl, welche Fahrzeugtypen in einem Objekt im Rahmen des Fahrzeugvermietsystems bereitgestellt werden, obliegt dem Betreiber des Fahrzeugvermietsystems und richtet sich z.B. nach der Nutzerstruktur und dem Umfeld des Objektes und den Wünschen der Nutzer.

Die Bereitstellung einer solchen Mobilitäts-Dienstleistung kann insbesondere bei neu zu errichtenden Objekten von Beginn an in die Planung einbezogen werden. Insbesondere kann in Abhängigkeit der in einem Objekt vorgesehenen Wohnungen und Büro- bzw. Gewerbeeinheiten die Anzahl der für das Fahrzeugvermietsystem notwendigen Stellplätze festgelegt werden. Ebenso ist es möglich, die für das Fahrzeugvermietsystem reservierten Stellplätze baulich oder zumindest räumlich von den übrigen Stellplätzen innerhalb des Objekts zu trennen. Ferner lässt sich die für die Realisierung der Mobilitätsdienstleistung notwendige vorgesehene Technik leichter integrieren.

Die Teilnahme der Bewohner und/oder Mieter eines Objekts an dem Fahrzeugvermietsystem erfolgt für die Benutzer ohne gesondert erforderliche Registrierung. Alleine der Umstand, dass eine Person Bewohner und/oder Mieter eines solchen Objekts ist, lässt ihn Teilnehmer des Fahrzeugvermietsystems sein. Es versteht sich von selbst, dass ein Führerschein zur Aktivierung der Mitgliedschaft vorgezeigt werden muss. Dieser wird z.B. mit einem RFID Chip versehen. Eine Registrierungsgebühr braucht nicht notwendigerweise erhoben werden. Eventuell zu erhebende Grundkosten können dabei - ohne gesondert gegenüber den Bewohnern und/oder Mietern abgerechnet zu werden - im Rahmen der Nebenkosten der bewohnten und/oder gemieteten Einheit verrechnet werden.

Durch die technische Ausgestaltung des Fahrzeugvermietsystems sowie die sich hieraus ergebenden Nutzungsmöglichkeiten, kann einerseits die Attraktivität der Mobilitäts-Dienstleistung gegenüber bislang bekannten Car Sharing-Diensten gesteigert werden. Dadurch, dass die Mobilitäts-Dienstleistung am Ort des Wohnens oder der Arbeit des Nutzerkreises angeboten wird, können diese auf ein eigenes Fahrzeug verzichten, wodurch sich eine Ressourcen-Ersparnis im Hinblick auf benötigten Parkraum, benötigte Ressourcen für die Herstellung und den Betrieb des Fahrzeugs usw. ergeben. Andererseits kann aus Sicht des Betreibers der Mobilitäts-Dienstleistung eine hohe Auslastung erzielt werden. So ist die Nutzung der Fahrzeuge während der Geschäftszeiten für die Mieter von Büros und/oder Gewerbeeinheiten von Interesse. Beispielsweise können diese mit öffentlichen Verkehrsmitteln zu ihrer Arbeitsstelle pendeln. Für während der Arbeitszeit benötigte Fahrten können diese auf ein Fahrzeug des Fahrzeugvermietsystems zurückgreifen. Hierdurch ergibt sich neben einem positiven ökologischen Aspekt eine gute Auslastung der Fahrzeuge unter der Woche. An den Wochenenden und Abenden unter der Woche greifen erfahrungsgemäß eher Privatpersonen auf die Fahrzeuge zurück. Ggfs. können auch die Büromitarbeiter bei Interesse das Fahrzeug abends oder am Wochenende buchen. Da eine Abrechnung, basierend auf einer monatlichen Grundgeühr und einer Gebühr pro Fahrt basierend auf einer Kombination von Zeit und gefahrenen Kilometern, vorgesehen ist, ist es für den Betreiber des Fahrzeugvermietsystems wirtschaftlich möglich, den Dienst innerhalb der geschlossenen Gemeinschaft (sog. Closed Community) anzubieten.

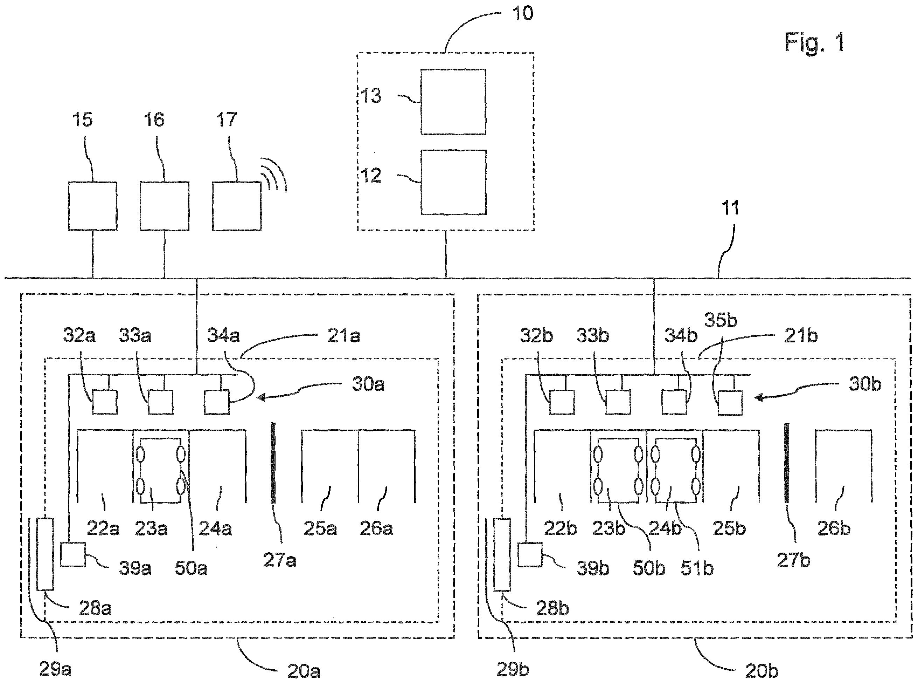

Fig. 1 illustriert in einer schematischen Darstellung zwei Objekte 20a, 20b der genannten Art, in denen eine wie oben beschriebene Mobilitäts-Dienstleistung angeboten wird. Nachdem das erste und das zweite Objekt 20a, 20b im Wesentlichen identisch aufgebaut sind, erfolgt lediglich eine detaillierte Beschreibung des ersten Objekts 20a. In entsprechender Weise lassen sich die Eigenschaften und Merkmale auf entsprechende Komponenten des zweiten Objekts 20b übertragen, deren Komponenten anstelle des Buchstabens "a" mit dem Buchstaben "b" gekennzeichnet sind.

Das erste Objekt 20a stellt eine wie oben beschriebene Wohnanlage dar, welche eine Tiefgarage 21a umfasst. In der Tiefgarage 21a ist eine Vielzahl an Stellplätzen für Fahrzeuge vorgesehen. Beispielhaft drei der Stellplätze 22a, 23a, 24a sind für Fahrzeuge des erfindungsgemäßen Fahrzeugvermietsystems reserviert. Zusätzlich sind weitere Stellplätze für private Fahrzeuge (Bezugszeichen 25a, 26a) vorgesehen. Die Stellplätze des Fahrzeugvermietsystems und die Stellplätze für private Fahrzeuge können durch eine Zugangssperre 27a voneinander getrennt sein. Ebenso ist es möglich, die Stellplätze für das Fahrzeugvermietsystem und die privaten Stellplätze räumlich getrennt in dem Objekt anzuordnen und evtl. mit unterschiedlichen Ein- und Ausfahrten zu versehen.

sen. Die Stellplatzsensorik 32a, 33a, 34a dient primär dazu, die Anwesenheit eines Fahrzeugs auf dem jeweils überwachten Stellplatz festzustellen. Dafür umfasst die Stellplatzsensorik wenigstens eine Kamera, welche in der Lage ist, ein reales Bild des auf dem überwachten Stellplatz stehenden Fahrzeugs aufzunehmen. Dieses kann dem Nutzer im Rahmen der Buchung eines Fahrzeugs auf einer Benutzerschnittstelle dann dargestellt werden. Darüber hinaus kann eine jeweilige Stellplatzsensorik 32a, 33a, 34a dazu ausgebildet sein, eventuelle Schäden an einem Fahrzeug festzustellen, indem ein Vergleich von Ist-Daten des Außenzustands wahlweise mit Soll- Daten eines Neufahrzeugs oder mit den zuletzt gespeicherten Ist-Daten vorgenommen wird. Hierzu kann die Stellplatzsensorik entsprechende Scanner oder Bildverarbeitungsmittel umfassen.

Die Sensorik 30a umfasst weiterhin eine Zugangssperrensensorik 39a, welche einer Zugangssperre 29a zu einer Einfahrt 28a zugeordnet ist. Wenn in der nachfolgenden Beschreibung von einer Einfahrt die Rede ist, so ist hierunter ebenfalls eine Ausfahrt zu verstehen. Für das prinzipielle Verständnis der Erfindung ist es nicht wesentlich, ob die Ein- und Ausfahrt über dasselbe oder unterschiedliche Tore erfolgen.

Die Zugangssperre 29a dient dazu, die Einfahrt 28a vor einem unbefugten Betreten durch Dritte zu schützen. Die Zugangsperre 29a kann als Garagentor, ggf. aber auch nur als Schranke oder versenkbarer Poller ausgebildet sein.

Obwohl in der vorliegenden Beschreibung von einem Vorsehen der Stellplätze des Fahrzeugvermietsystems in einer Tiefgarage eines Objekts die Rede ist, könnten die Stellplätze ganz oder teilweise auch auf einer Freifläche vorgesehen sein. Wesentlich für die vorliegende Erfindung ist, dass der Ort der Stellplätze lediglich dem oben genannten Nutzerkreis aus Bewohnern und/oder Mietern des Objekts zugänglich ist. Es versteht sich, dass im Rahmen des erfindungsgemäßen Fahrzeugvermietsystems auch mehrere Ein- und Ausfahrten für die Stellplätze des Fahrzeugvermietsystems vorgesehen sein könnten, wobei dann die entsprechende Zugangssperre samt Zugangssperrensensorik an jeder Einfahrt vorgesehen wäre.

Stellplatzsensoriken 32a, 33a, 34a und Zugangssperrensensorik 39a sind über eine Kommunikationsverbindung miteinander und mit einem Buchungssystem 10 gekoppelt. Die Kommunikationsverbindung kann, wie dies in Fig. 1 dargestellt ist, nach Art eines Bussystems ausgebildet sein. Prinzipiell ist auch jede andere Art von Kommunikationsverbindung denkbar. Insbesondere könnten einzelne oder sämtliche der Sensoriken auch drahtlos mit dem Buchungssystem 10 kommunizieren.

Während das erste Objekt 20a lediglich beispielhaft über drei Stellplätze 22a, 23a, 24a für das Fahrzeugvermietsystem verfügt, stellt das zweite Objekt 20b insgesamt vier Stellplätze 22b, 23b, 24b, 25b für Fahrzeuge des Fahrzeugmietsystems bereits. Aus zeichnerischen Gründen ist in dem zweiten Objekt 20b lediglich ein privater Stellplatz 26b dargestellt, der ebenfalls durch eine Zugangssperre 27b von den Stellplätzen des Fahrzeugvermietsystems getrennt ist. Die entsprechenden Stellplatzsensoriken sind ebenfalls an die Kommunikationsverbindung 11 und damit das Buchungssystem 10 angeschlossen.

Mit den Bezugszeichen 15, 16, 17 sind Benutzerschnittstellen für den Nutzerkreis des Fahrzeugvermietsystems gekennzeichnet. Bei der Benutzerschnittstelle 15 handelt es sich beispielsweise um einen PC, der beispielhaft drahtgebunden mit der Kommunikationsverbindung 11 verbunden ist. Die Benutzerschnittstelle 16 repräsentiert bspw. ein Haustechnikgerät, wie z.B. eine in ihren Funktionen erweiterte Videogegensprechanlage. Mit dem Bezugszeichen 17 ist ein Mobilgerät, bspw. ein Smartphone oder Laptop, gekennzeichnet, welcher drahtlos mit dem Buchungssystem 10 kommunizieren kann. Die Benutzerschnittstellen 15, 16, 17 umfassen eine entsprechende Software, welche bspw. browserbasiert ist, und die Nutzung des Buchungssystems für die Anmietung eines Fahrzeugs des Fahrzeugmietsystems bereitstellen.

Lediglich beispielhaft ist auf dem Stellplatz 23a des ersten Objekts 20a ein Fahrzeug 50a abgestellt. In dem zweiten Objekt 20b sind auf den Stellplätzen 23b, 24b abgestellte Fahrzeuge mit dem Bezugszeichen 50b, 51b gekennzeichnet.

Das Buchungssystem 10 umfasst neben einem Zentralrechner 12 zur Erfassung und Verarbeitung von über die Benutzerschnittstellen gemachten Benutzereingaben (Buchungen) eine Parkplatzorganisationseinheit 13.

Die Nutzung des Fahrzeugvermietsystems wird nachfolgend anhand der Nutzung/Miete eines Fahrzeugs 50a des ersten Objekts 20a durch einen Bewohner und/oder Mieter beschrieben.

Die Buchung eines Fahrzeuges erfolgt unter Nutzung einer der Benutzerschnittstellen 15, 16, 17 und einer Nutzereingabe, welche zumindest eine Information über einen Mietbeginn und ein Mietende eines Fahrzeuges sowie eine Nutzerkennung umfasst. Zusätzlich werden eine Fahrzeugkennung und eine Objektkennung in einem entsprechenden Datensatz gespeichert. Die Nutzerkennung identifiziert das gebuchte Fahrzeug. Die Objektkennung repräsentiert eine Information über das Objekt und das oder die ihm zugeordneten Fahrzeuge. Das gleiche Fahrzeug 50a wird u.U. von einem weiteren Bewohner und/oder Mieter des ersten Objekts 20a unmittelbar im Anschluss an das Mietende des ersten Mietvorganges gebucht.

Um sicherzustellen, dass der darauffolgende Mieter das Fahrzeug zu seiner gewünschten Zeit übernehmen kann, muss der erste Mieter des Fahrzeugs 50a dieses vor Erreichen des Mietendes in dem ersten Objekt 20a auf einem der Stellplätze 22a, 23a, 24a abgestellt haben. Die den Stellplatz 23a überwachende Stellplatzsensorik 33a stellt nunmehr die Anwesenheit des Fahrzeugs 50a vor dem Mietende des ersten Mieters fest. In dem Buchungssystem wird dieser Umstand nun kenntlich gemacht. Zum einen kann dem nachfolgenden, zweiten Mieter des Fahrzeugs ein früherer möglicher Mietbeginn mitgeteilt werden. Ist eine solche Buchung noch nicht vorgenommen, so wird zum anderen das Fahrzeug 50a in dem Buchungssystem als für eine Miete frei verfügbar angezeigt. Die Stellplatzsensorik ermöglicht damit eine Abbildung der Realität des Vorhandenseins eines bestimmten Fahrzeugs in dem Buchungssystem. Dies ermöglicht eine insgesamt bessere Auslastung der, in dem ersten Objekt 20a zur Verfügung gestellten Fahrzeuge.

Gegenüber in den Fahrzeugen des Fahrzeugvermietsystems vorgesehenen Telematikeinheiten kann die vorzeitige Rückgabe oder Anwesenheit eines Fahrzeugs auf einem der Stellplätze auch dann sichergestellt werden, wenn die Telematikeinheit an sich keine Kommunikationsverbindung zu dem Buchungssystem 10 hat. Die Situation tritt häufig in Tiefgaragen, in welchen die entsprechenden Funksignale durch dicke Betonbauteile abgeschirmt werden, auf.

Die an den Einfahrten 28a, 28b der Objekte 20a, 20b realisierten Zugangssperrensensoriken ermöglichen es, den dem Objekt 20a zugeordneten Fahrzeugen (456a) eine Parkmöglichkeit auf einem freien Stellplatz des Objekts 20b zu gewähren. Hierbei detektiert die Zugangssperrensensorik 39a die Präsenz des Fahrzeugs 50a und kann anhand der Nutzerkennung und/oder Fahrzeugkennung und/oder Objektkennung die diesem zugewiesenen Rechte bzgl. der Nutzung von Stellplätzen anderer Objekte überprüfen. Im Rahmen der Mobilitäts-Dienstleistung ist z.B. vorgesehen, den Fahrzeugen 50a des ersten Objekts eine Parkmöglichkeit auf den Stellplätzen 22b, 23b, 24b, 25b des zweiten Objekts 20b zu gewähren. Nach entsprechender Überprüfung durch die Zugangssperrensensorik 39b wird die Zugangssperre 29b freigegeben, sodass das Fahrzeug 50a auf einem der freien Parkplätze 22b, 25b parken kann.

Ob in dem zweiten Objekt 20b Stellplätze für das Fahrzeug 50a des ersten Objekts 20a frei sind, wird durch die Parkplatzorganisationseinheit 13 ermittelt, welche aufgrund der die Stellplätze überwachenden Stellplatzsensoriken Informationen über freie Stellplätze hat. Die entsprechenden Informationen werden wahlweise an eine in den Fahrzeugen integrierten Benutzerschnittstelle und/oder eine der Benutzerschnittstellen 15, 16, 17, welche dem Nutzer eines Fahrzeugs zur Verfügung stehen, übermittelt.

Um weiterhin den Bewohnern und/oder Mietern der Objekte 20a, 20b Fahrzeuge für eine Miete in ausreichender Verfügbarkeit zur Verfügung stellen zu können, kann weiterhin vorgesehen sein, dass Fahrzeuge eines spontanen (Roadside-)Fahrzeugvermietungssystems freie Stellplätze des Fahrzeugvermietsystems in den Objekten 20a, 20b zum Parken benutzen können. Dabei ist allerdings lediglich die Einfahrt solcher Fahrzeuge in die entsprechenden Objekte vorgesehen. Die Parkplätze werden Teilnehmern des Roadside CarSharing Systems als verfügbar angezeigt, sofern sich diese im Zustand Fahren befinden. Stellen Sie hingegen eine Buchungsanfrage für ein Fahrzeug, werden die Fahrzeuge auf den Parkplätzen der Wohnanlage den Roadside Teilnehmern nicht angezeigt. Eine Ausfahrt wird Fahrzeugen eines Roadside-Fahrzeugvermietungssystems verwehrt, solange nicht diese von einem Mieter und/oder Bewohner des betreffenden Objekts benutzt werden. Eine entsprechende Überprüfung kann durch Fahrzeugkennungen und Nutzerkennungen erfolgen. Beispielsweise kann beim Öffnen eines auf einem der Stellplätze des Fahrzeugvermietsystems geparkten Fahrzeugs durch das betreffende Fahrzeug festgestellt werden, ob dieses von einem Bewohner und/oder Mieter des betreffenden Objekts geöffnet wurde. Ist dies der Fall, so wird durch die Zugangssperrensensorik die zugeordnete Zugangssperre für eine Ausfahrt geöffnet. Es sind weitere Services denkbar, z.B. dass Fahrzeuge, die von der Wohnung aus gebucht wurden, auf Anforderung des Bewohners automatisch aus der Tiefgarage herausgefahren werden (so dass der Bewohner direkt vor dem Haus einsteigen kann), sofern in den Fahrzeugen die Funktion Autonomes Fahren verfügbar ist.

Die Rechte von Bewohnern und/oder Mietern eines bestimmten Objekts im Hinblick auf die Benutzung der Stellplätze eines anderen Objekts können für beliebige räumliche Gebiete geregelt sein. Beispielsweise kann es den Bewohnern und/oder Mietern ausgewählter Objekte möglich sein, in allen Objekten einer Stadt oder eines Landes Fahrzeuge zu parken, welche dem Fahrzeugvermietsystem angehören. Demgegenüber kann dieses Recht Bewohnern und/oder Mietern anderen Objekte verwehrt sein, sodass diese bspw. lediglich die Objekte in ihrer Stadt benutzen können. Eine Möglichkeit kann z.B. sein, dass nur Bewohner, die für ihre eigene Anlage die Parkplätze für Nutzer aus anderen Anlagen freigegeben haben, ebenfalls in anderen Anlagen parken dürfen.

Dadurch, dass der Benutzerkreis des Fahrzeugvermietsystems auf die Bewohner und/oder Mieter eines Objekts beschränkt ist, ist es möglich, bestimmte für die Buchung eines Fahrzeugs erforderliche Informationen über andere Nutzer einem buchenden Nutzer bereit zu stellen. Hierdurch kann eine Absprache auf direktem Wege zwischen Nutzern erfolgen, wenn sich bei der Buchung eines Fahrzeuges Überschneidungen ergeben sollten.

Ein Vorteil des erfindungsgemäß vorgeschlagenen Fahrzeugvermietsystems besteht darin, dass Nutzern eines Objekts die Mobilität direkt vor Ort bereitgestellt wird. Durch die geschlossene Gemeinschaft eines Objekts können Änderungswünsche leichter abgestimmt werden. Vorhandene Stellplätze werden besser ausgenutzt, da sich mehrere Bewohner und/oder Mieter ein Auto teilen. Die Anzahl der Privatfahrzeuge nimmt ab (ein CarSharing Auto ersetzt laut Studien 4-8 Privatfahrzeuge). Die Nutzer haben insgesamt mehr Parkraum, der auch in anderen Städten zur Verfügung gestellt wird. Das Fahrzeugvermietsystem bietet sich insbesondere für Objekte in solchen Städten oder Stadtteilen an, in denen große Parknot besteht und bei denen Wohnungen z.B. als Zweit- oder Drittwohnung genutzt werden.

Das Fahrzeugvermietsystem stellt eine Ergänzung zum spontanen Car Sharing, dem sog. Roadside-Car Sharing bereit. Hierdurch wird innerstädtischer Parkraum gesichert.

Die Unterbringung von Fahrzeugen in Tiefgaragen oder Stellplätzen betreffender Objekte ist komfortabler für die Nutzer und schonender für die Fahrzeuge. Zur Nutzung eines Fahrzeugs des Fahrzeugvermietsystems müssen die Nutzer - im Gegensatz zu bisherigen Lösungen - keine weiten Wege zurücklegen. Die Nutzung kann wie bei einem Privatfahrzeug erfolgen.

Stellplätze des Fahrzeugvermietsystems, welche nicht durch einem Objekt zugeordnete Fahrzeuge belegt sind, können von Fahrzeugen anderer Fahrzeugvermietsysteme gegen Entgelt belegt werden. Eine entsprechende Verrechnung ist mittels der die Stellplätze überwachenden Stellplatzsensoriken möglich. Ebenso kann eine Parkgebühr für Fahrzeuge des Fahrzeugvermietsystems aus anderen Städten verrechnet werden.

In das Parkplatzkonzept können ebenfalls Tiefgaragen von Partner-Unternehmen einbezogen werden, bspw. von Firmen mit Büros in zentralen Lagen. Um die Effizienz und Akzeptanz des Fahrzeugvermietsystems zu maximieren ist es zweckmäßig, wenn die das Fahrzeugvermietsystem bereitstellenden Objekte möglichst gleichmäßig in einer Stadt verteilt sind. Insbesondere bieten sich Ballungszentren für die Realisierung des Fahrzeugvermietsystems an.

### Bezugszeichenliste

- 10: Buchungssystem
- 11: Kommunikationsverbundung
- 12: Zentralrechner
- 13: Parkplatzorganisationseinheit
- 15: Benutzerschnittstelle (z.B. PC)
- 16: Benutzerschnittstelle (z.B. Haustechnikgerät)
- 17: Benutzerschnittstelle (z.B. Mobilgerät)

- 20a: erstes Objekt
- 21a: Tiefgarage
- 22a: Stellplatz des Fahrzeugvermietsystems
- 23a: Stellplatz des Fahrzeugvermietsystems
- 24a: Stellplatz des Fahrzeugvermietsystems
- 25a: anderer Stellplatz
- 26a: anderer Stellplatz
- 27a: Zugangssperre zwischen Stellplätzen des Fahrzeugvermietsystems und anderen Stellplätzen
- 28a: Einfahrt
- 29a: Zugangssperre
- 30a: Sensorik
- 32a: Stellplatzsensorik
- 33a: Stellplatzsensorik
- 34a: Stellplatzsensorik
- 39a: Zugangssperrensensorik
- 50a: Fahrzeug, das dem ersten Objekt zugeordnet ist

- 20b: zweites Objekt
- 21b: Tiefgarage
- 22b: Stellplatz des Fahrzeugvermietsystems
- 23b: Stellplatz des Fahrzeugvermietsystems
- 24b: Stellplatz des Fahrzeugvermietsystems
- 25b: Stellplatz des Fahrzeugvermietsystems
- 26b: anderer Stellplatz
- 27b: Zugangssperre zwischen Stellplätzen des Fahrzeugvermietsystems und anderen Stellplätzen
- 28b: Einfahrt
- 29b: Zugangssperre
- 30b: Sensorik
- 32b: Stellplatzsensorik
- 33b: Stellplatzsensorik
- 34b: Stellplatzsensorik
- 35b: Stellplatzsensorik
- 39b: Zugangssperrensensorik
- 50b: Fahrzeug, das dem zweiten Objekt zugeordnet ist
- 51b: Fahrzeug, das dem zweiten Objekt zugeordnet ist

## Patentansprüche

1. Verfahren zum rechnergestützten Betreiben eines Fahrzeugvermietsystems, bei dem
- eine Anzahl an Fahrzeugen einem definierten Nutzerkreis für eine temporäre Nutzung bereitgestellt wird;
- die Fahrzeuge (50a) an einem oder mehreren, ausschließlich dem Nutzerkreis zugänglichen Orten mit jeweils einem oder mehreren, für die Fahrzeuge (50a) reservierten Stellplätzen bereitgestellt werden;
- basierend auf einer Nutzereingabe, welche zumindest eine Information über einen Mietbeginn und ein Mietende eines Fahrzeugs (50a) sowie eine Nutzerkennung umfasst, in einem rechnergestützten Buchungssystem (10) eine Buchung des Fahrzeugs (50a) durchgeführt wird;
**dadurch gekennzeichnet, dass**
- eine die Stellplätze (22a, 23a, 24a) mit jeweiligen, den Stellplätzen (22a, 23a, 24a) zugewiesenen Stellplatzsensoriken (32a, 33a, 34a) überwachende Sensorik (30a) die Anwesenheit eines Fahrzeugs auf einem jeweils überwachten Stellplatz (22a, 23a, 24a) feststellt, wobei jede Stellplatzsensorik mindestens eine Kamera umfasst;
- das Buchungssystem (10) ein Fahrzeug (50a), das vor Ablauf des in dem Buchungssystem (10) gespeicherten Mietendes auf einem der reservierten Stellplätze (22a, 23a, 24a) durch die Sensorik (30a) als abgestellt detektiert wird, in dem Buchungssystem (10) als für eine Miete frei verfügbar angezeigt.

2. Verfahren nach Anspruch 1, bei dem die Stellplätze (22a, 23a, 24a) in einem oder mehreren Objekten (20a, 20b) einer jeweiligen Eigentümergemeinschaft angeordnet sind, wobei lediglich Bewohner und/oder Mieter der betreffenden Objekte Teilnehmer des Fahrzeugvermietungssystems für ihr Objekt (20a, 20b), und optional für eine Mehrzahl weiterer Objekte, sind.

3. Verfahren nach Anspruch 2, bei dem für den Zugang zu den Stellplätzen der Objekte die Nutzerkennung ausgewertet wird, wobei ein Zugang nur bei freigeschalteter Nutzerkennung gewährt wird.

4. Verfahren nach einem der vorhergehenden Ansprüche, bei dem die Nutzereingabe über eine Benutzerschnittstelle (15, 16, 17) erfolgt, über die dem Nutzer für eine Miete verfügbare Fahrzeuge (50a) als Videobild, optional mit weiteren Informationen über das Fahrzeug (50a), dargestellt werden.

5. Verfahren nach einem der vorhergehenden Ansprüche, bei dem durch die Sensorik (30a) freie Stellplätze (22a, 23a, 24a) ermittelt und einer Parkplatzorganisationseinheit des Buchungssystems (10) übermittelt werden, wobei an eine in den Fahrzeugen integrierte Benutzerschnittstelle (15, 16, 17) und/oder die Benutzerschnittstellen eine Information über freie Stellplätze (22a, 23a, 24a) an den Orten mit den Stellplätzen übermittelt wird.

6. Verfahren nach Anspruch 5, bei dem basierend auf einer Nutzereingabe durch das Buchungssystem (10) eine Reservierung eines freien Stellplatzes (22a, 23a, 24a) vorgenommen wird.

7. Verfahren nach einem der vorhergehenden Ansprüche, bei dem in dem Buchungssystem (10) für jede Nutzerkennung ein Datensatz gespeichert wird, der eine der Nutzerkennung zugeordnete Objektkennung des Objekts (20a, 20b), in dem der Nutzer Mieter und/oder Bewohner des Objekts (20a, 20b) ist, sowie Rechte bezüglich der Nutzung von Stellplätzen anderer Objekte umfasst.

8. Verfahren nach Anspruch 7, bei dem bei der Detektion eines Fahrzeugs (50a, 50b, 51b) des Fahrzeugvermietsystems an einer Zugangssperre eines der anderen Objekte anhand der Objekterkennung eines Nutzers die ihm zugeordneten Rechte für dieses Objekt (20a, 20b) ermittelt werden und abhängig davon die Zugangssperre für die Ein- und Ausfahrt des Fahrzeugs (50a) in das Objekt (20a, 20b) freigegeben wird oder nicht.

9. Verfahren nach einem der vorhergehenden Ansprüche, bei dem bei der Detektion eines Fahrzeugs (50a) an der Zugangssperre eines der Objekte des Fahrzeugvermietsystems anhand dessen Fahrzeugkennung überprüft wird, ob dieses Fahrzeug (50a) ein Fahrzeug (50a) eines spontanen (Roadside-) Fahrzeugvermietungssystems ist, wobei im positiven Fall die Zugangssperre für die Einfahrt des Fahrzeugs (50a) in das Objekt (20a, 20b) freigegeben wird.

10. Verfahren nach einem der vorhergehenden Ansprüche, bei dem abhängig von, einer Nutzerkennung in dem Buchungssystem (10) zugewiesenen, Rechten über die Benutzerschnittstelle (15, 16, 17) in Reaktion auf eine Eingabe eines Nutzers Informationen über einen anderen Nutzer eines reservierten Fahrzeugs (50a) ausgegeben werden.

11. Verfahren nach einem der vorhergehenden Ansprüche, bei dem von einem Nutzer in einem der Fahrzeuge (50a) des Fahrzeugvermietsystems getätigte oder auf einer Nutzereingabe basierende, das Fahrzeug (50a) betreffende persönliche Einstellungen zusammen mit dessen Nutzerkennung in einem Datenspeicher des Buchungssystems (10) gespeichert werden und bei späterer Nutzung dieses oder eines anderen Fahrzeugs (50a) des Fahrzeugvermietsystems durch diesen Nutzer, insbesondere automatisch, in das Fahrzeug (50a) geladen und aktiviert werden.

12. Verfahren nach Anspruch 11, bei dem bei unterschiedlichen Fahrzeugtypen eine Adaption der persönlichen Eigenschaften an die Gegebenheiten des Fahrzeugs (50a, 50b, 51b) erfolgt.

13. Verfahren nach einem der vorhergehenden Ansprüche, bei dem zur Feststellung von Schäden an einem zurückgegebenen Fahrzeug (50a) die Sensorik (30a) das Fahrzeugäußere erfasst und eine Recheneinheit einen Vergleich der Ist-Daten mit für dieses Fahrzeug (50a) gespeicherten Soll-Daten und/oder mit den zeitlich zuletzt gespeicherten Ist-Daten vornimmt.

14. Fahrzeugvermietsystem, umfassend:
- eine Anzahl von Fahrzeugen (50a) zur Bereitstellung zur temporären Benutzung an einen definierten Nutzerkreis;
- ein oder mehrere, ausschließlich dem Nutzerkreis zugängliche Orte mit jeweils einem oder mehreren, für die Fahrzeuge (50a) reservierten Stellplätzen (22a, 23a, 24a);
- eine die Stellplätze (22a, 23a, 24a) überwachende Sensorik (30a) mit jeweiligen, den Stellplätzen (22a, 23a, 24a) zugewiesenen Stellplatzsensoriken (32a, 33a, 34a) zur Feststellung der Anwesenheit eines Fahrzeugs auf einem jeweils überwachten Stellplatz (22a, 23a, 24a), wobei jede Stellplatzsensorik mindestens eine Kamera umfasst; und
- ein rechnergestütztes Buchungssystem (10),
wobei das Fahrzeugvermietsystem zur Durchfürhung des Verfahrens gemäß einem der Ansprüche 1 bis 13 angepasst ist.

## Claims

1. A method for the computer-aided operation of a vehicle rental system, in which method
- a number of vehicles are provided to a defined user group for temporary use;
- the vehicles (50a) are provided at one or more locations accessible only to the user group, each location having one or more parking spaces reserved for the vehicles (50a);
- on the basis of a user input, which comprises at least information about the start and end of a rental period of a vehicle (50a), and a user identifier, the vehicle (50a) is booked in a computer-aided booking system (10);
**characterised in that**
- a sensor system (30a) that monitors the parking spaces (22a, 23a, 24a) by way of parking space sensor systems (32a, 33a, 34a) assigned to the various parking spaces (22a, 23a, 24a) determines the presence of vehicles at the monitored parking spaces (22a, 23a, 24a), wherein each parking space sensor system comprises at least one camera;
- a vehicle (50a) that is detected as parked at one of the reserved parking spaces (22a, 23a, 24a) by the sensor system (30a) before the rental end stored in the booking system (10) has been reached is indicated by the booking system (10) as available for rental in the booking system (10).

2. A method according to claim 1, in which the parking spaces (22a, 23a, 24a) are arranged in one or more properties (20a, 20b) of a particular community of owners, wherein only residents and/or renters of the relevant properties are participants in the vehicle rental system for their property (20a, 20b), and optionally for a plurality of further properties.

3. A method according to claim 2, in which the user ID is checked for access to the parking spaces of the properties, wherein access is granted only upon approval of the user ID.

4. A method according to any one of the preceding claims, in which the user input is made via a user interface (15, 16, 17), via which vehicles (50a) available to rent are presented to the user in the form of a video image, optionally with further information about the vehicle (50a).

5. A method according to any one of the preceding claims, in which free parking spaces (22a, 23a, 24a) are determined by the sensor system (30a) and are transmitted to a parking space organisation unit of the booking system (10), wherein information about free parking spaces (22a, 23a, 24a) at the locations with the parking spaces is transmitted to a user interface (15, 16, 17) integrated in the vehicles and/or the user interfaces.

6. A method according to claim 5, in which a free parking space (22a, 23a, 24a) is reserved by the booking system (10) on the basis of a user input.

7. A method according to any one of the preceding claims, in which a data set is stored in the booking system (10) for each user ID, which data set comprises a property ID of the property (20a, 20b) assigned to the user ID, in which the user is the renter and/or resident of the property (20a, 20b), and also rights regarding the use of parking spaces of other properties.

8. A method according to claim 7, in which, upon detection of a vehicle (50a, 50b, 51b) of the vehicle rental system at an access barrier of another property, the rights assigned to a user for said other property (20a, 20b) are determined on the basis of the property ID of the user, and the access barrier is opened or not, for entrance and exit of the vehicle (50a) into/from the property (20a, 20b), according to said rights.

9. A method according to any one of the preceding claims, in which, upon detection of a vehicle (50a) at the access barrier of one of the properties of the vehicle rental system, it is checked on the basis of the vehicle ID of said vehicle whether this vehicle (50a) is a vehicle (50a) of a spontaneous (roadside) vehicle rental system, wherein, if so, the access barrier for entrance of the vehicle (50a) into the property (20a, 20b) is opened.

10. A method according to any one of the preceding claims, in which, in response to a user input, information about another user of a reserved vehicle (50a) is output via the user interface (15, 16, 17) depending on rights allocated to a user ID in the booking system (10).

11. A method according to any one of the preceding claims, in which personal settings concerning the vehicle (50a) based on a user input or chosen by a user in one of the vehicles (50a) of the vehicle rental system are saved in a data storage device of the booking system (10) together with the user ID, and are loaded into the vehicle (50a) and activated, more especially automatically, when the user uses this or another vehicle (50a) of the vehicle rental system.

12. A method according to claim 11, in which, if there are differentvehicle types, the personal properties are adapted to the details of the vehicle (50a, 50b, 51b).

13. A method according to any one of the preceding claims, in which the sensor system (30a) detects a vehicle exterior for the purpose of detecting damage to a returned vehicle (50a), and a computing unit carries out a comparison of the current data with target data saved for this vehicle (50a) and/or with the most recently saved current data.

14. A vehicle rental system comprising:
- a number of vehicles (50a) provided to a defined user group for temporary use;
- one or more locations, accessible only to the user group, each location having one or more parking spaces (22a, 23a, 24a) reserved for the vehicles (50a);
- a sensor system (30a) monitoring the parking spaces (22a, 23a, 24a) and having parking space sensor systems (32a, 33a, 34a) assigned to the various parking spaces (22a, 23a, 24a) for determining the presence of vehicles at the monitored parking spaces (22a, 23a, 24a), wherein each parking space sensor system comprises at least one camera;
- a computer-aided booking system (10),
wherein the vehicle rental system is suitable for carrying out the method according to any one of claims 1 to 13.

## Revendications

1. Procédé de gestion d'un système de location de véhicule avec l'assistance d'un calculateur, selon lequel
- on fournit un nombre de véhicules à un cercle d'utilisateurs défini pour une utilisation temporaire,
- on met à disposition les véhicules (50a) à un ou plusieurs endroits exclusivement accessibles au cercle d'utilisateurs avec chaque fois un ou plusieurs emplacements de rangement réservés aux véhicules (50a),
- en s'appuyant sur une entrée d'utilisateur, qui comprend au moins une information relative au début de la location et à la fin de la location d'un véhicule (50a) ainsi que d'une caractéristique d'utilisateur, le système de gestion (10) assisté par ordinateur, gère le véhicule (50a),
procédé **caractérisé en ce que**
- des capteurs (30a) surveillant les emplacements de stationnement (22a, 23a, 24a) avec des capteurs d'emplacement de stationnement (32a, 33a, 34a) attribués aux emplacements de stationnement (22a, 23a, 24a) respectifs, détectent la présence d'un véhicule sur l'emplacement de stationnement (22a, 23a, 24a) respectif, surveillé et chaque capteur d'emplacement de stationnement comporte au moins une caméra,
- le système de gestion (10) affiche un véhicule (50a) comme étant disponible pour la location dans le système de gestion (10), véhicule qui avant la fin de la location enregistrée dans le système de gestion (10) a été détecté comme rangé sur l'un des emplacements réservé (22a, 23a, 24a) par les capteurs (30a).

2. Procédé selon la revendication 1,
selon lequel
les emplacements de stationnement (22a, 23a, 24a) correspondent à un ou plusieurs biens (20a, 20b) d'une communauté respective de propriétaires, uniquement les habitants et/ou les locataires des biens concernés participant au système de location de véhicules pour leur bien (20a, 20b) et en option pour plusieurs autres biens.

3. Procédé selon la revendication 2,
selon lequel
pour l'accès aux emplacements de stationnement des biens, on exploite la caractéristique d'utilisateur et l'accès n'est libéré que si l'utilisateur est connu.

4. Procédé selon l'une des revendications précédentes,
selon lequel
l'entrée d'utilisateur se fait par une interface d'utilisateur (15, 16, 17) qui présente les véhicules (50a) disponibles en location pour l'utilisateur comme images vidéo en option avec d'autres informations concernant le véhicule (50a).

5. Procédé selon l'une des revendications précédentes,
selon lequel
les capteurs (30a) déterminent les emplacements de stationnement libres (22a, 23a, 24a) qui sont transmis à une unité d'organisation de parking du système de gestion (10), et on transmet une information concernant les emplacements de stationnement libres (22a, 23a, 24a) aux endroits avec les emplacements de stationnement, à une interface d'utilisateur (15, 16, 17) intégrée dans les véhicules et/ou des interfaces d'utilisateur.

6. Procédé selon la revendication 5,
selon lequel
le système de gestion (10) réserve un emplacement de stationnement libre (22a, 23a, 24a) en fonction d'une entrée d'utilisateur.

7. Procédé selon l'une des revendications précédentes,
selon lequel
le système de gestion (10), pour chaque reconnaissance d'utilisateur mémorise un jeu de données qui est l'une des caractéristiques d'utilisateur associée à la caractéristique du bien (20a, 20b) dont l'utilisateur est locataire/habitant du bien (20a, 20b) ainsi que des droits concernant l'utilisation d'emplacements de stationnement d'autres biens.

8. Procédé selon la revendication 7,
selon lequel
la détection d'un véhicule (50a, 50b, 51b) du système de location de véhicules a une barrière d'accès de l'un des autres biens, à l'aide de la reconnaissance de biens d'un utilisateur, les droits associés à ce bien (20a, 20b) seront transmis et en fonction de cela, à la barrière d'accès pour l'entrée ou la sortie de véhicule (50a) est libérée ou non, dans le bien (20a, 20b).

9. Procédé selon l'une des revendications précédentes,
selon lequel
pour la détection d'un véhicule (50a) à la barrière d'accès de l'un des biens du système de location de véhicules, avec la plaque du véhicule on vérifie si ce véhicule (50a) est un véhicule (50a) d'un système de location de véhicules temporaires (50a) et dans l'affirmative, la barrière d'accès est ouverte pour permettre l'entrée du véhicule (50a) dans le bien (20a, 20b).

10. Disponibilité selon l'une des revendications précédentes,
selon lequel
en fonction des droits attribués à une caractéristique d'utilisateur dans le système de gestion (10) on attribue pour l'interface d'utilisateur (15, 16, 17) en réaction à une entrée d'utilisateur on émet des informations concernant un autre utilisateur d'un véhicule réservé (50a).

11. Procédé selon l'une des revendications précédentes,
selon lequel
les réglages personnels concernant le véhicule (50a) qui ont été effectués par l'utilisateur dans le véhicule (50a) du système de location de véhicules ou qui viennent d'une entrée de l'utilisateur, sont enregistrés en même temps que la caractéristique d'utilisateur, dans une mémoire de données du système de gestion (10) et lors d'une utilisation ultérieure de ce véhicule ou d'un autre véhicule (50a) du système de location de véhicules par cet utilisateur, ces réglages seront chargés, activés en particulier automatiquement dans le véhicule (50a).

12. Procédé selon la revendication 11,
selon lequel
pour des types de véhicules différents, on adapte les caractéristiques personnelles aux données du véhicule (50a, 50b, 51b).

13. Procédé selon l'une des revendications précédentes,
selon lequel
pour constater les dommages sur un véhicule rendu (50a), les capteurs (30a) saisissent l'extérieur du véhicule et une unité de calcul compare les données réelles de ce véhicule (50a) et les données de consigne enregistrées et/ou avec les dernières données réelles enregistrées.

14. Système de location de véhicules comprenant
- un ensemble de véhicules (50a) disponible pour l'utilisation temporaire pour un cercle défini d'utilisateurs,
- un ou plusieurs emplacements accessibles uniquement au cercle d'utilisateurs avec chaque fois un ou plusieurs emplacements de stationnement (22a, 23a, 24a) réservés pour les véhicules (50a),
- des capteurs (30a) surveillant les emplacements de stationnement (22a, 23a, 24a) avec des capteurs d'emplacement de stationnement (32a, 33a, 34a) attribués aux emplacements de stationnement (22a, 23a, 24a) pour constater la présence d'un véhicule sur l'un des emplacements respectifs (22a, 23a, 24a) surveillés, chaque capteur d'emplacement de stationnement comprenant au moins une caméra, et
- un système de gestion (10) assisté par ordinateur,
le système de location de véhicules étant adapté pour exécuter le procédé selon l'une des revendications 1 à 13.
